# FASCICULE DE BREVET EUROPEEN

(11) **EP 1 551 665 B1**
(45) Date de publication et mention de la délivrance du brevet: **13.02.2008**
(21) Numéro de dépôt: 03769590.5
(22) Date de dépôt: 09.09.2003
(51) Int. Cl.: B60N 3/04

(54) **DISPOSITIF D AMORTISSEMENT DE CHOC POUR VEHICULE AUTOMOBILE**
STOSSDÄMPFERVORRICHTUNG FÜR KRAFTFAHRZEUG
SHOCK ABSORBER DEVICE FOR MOTOR VEHICLE

(30) Priorité: 10.09.2002 FR 0211184
(43) Date de publication de la demande: 13.07.2005
(73) Titulaire: RENAULT S.A.S., 92100 Boulogne Billancourt (FR)
(72) Inventeur: JOSSE, Pascal, F-78500 Sartrouville (FR)
(86) Numéro de dépôt international: PCT/FR2003/002668
(87) Numéro de publication internationale: WO 2004/024495

(56) Documents cités:
- WO-A-98/47735
- DE-A- 19 933 396
- DE-U- 6 910 312
- FR-A- 2 746 726

## Description

L'invention concerne un dispositif d'amortissement de choc destiné à être fixé à un support de plancher d'un véhicule automobile, de manière à protéger, en cas de choc dudit véhicule, les pieds d'un passager en appui sur ledit dispositif.

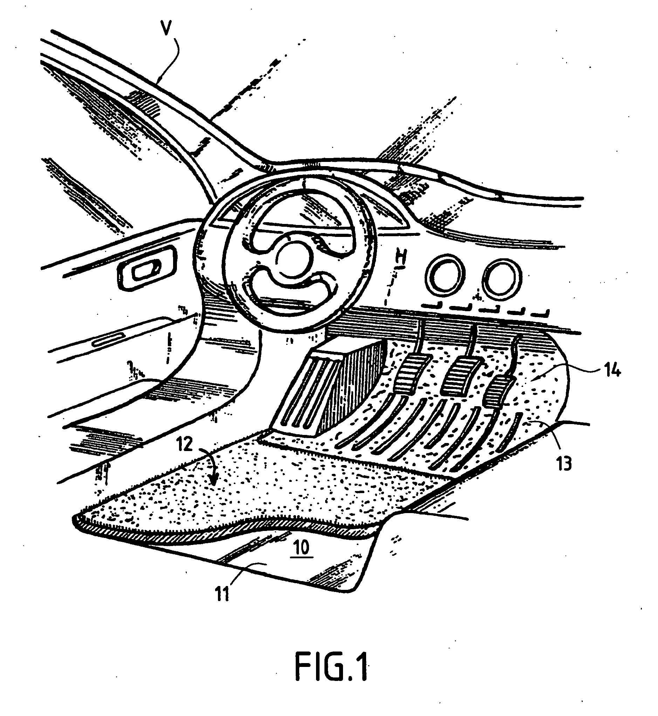

Classiquement, comme représenté sur la figure 1, un véhicule V comporte un plancher 10 comprenant un revêtement 12, en matière textile ou plastique, fixé, par exemple par collage, rivetage ou encliquetage, sur un support de plancher 11.

Le support de plancher 11 est généralement une tôle en acier solidaire du châssis du véhicule V.

Sous l'effet d'un choc brutal du véhicule V, par exemple dans les situations où le véhicule V, roulant à plus de 65 km/h, heurte frontalement un obstacle fixe, les pieds du passager sont poussés violemment vers le plancher 10, en particulier s'ils prennent appui dans une zone repose-pieds 13 du revêtement 12, inclinée par rapport à l'horizontal. Si le plancher 10 n'est pas prévu pour amortir ce choc, les pieds peuvent en conséquence subir des lésions graves.

Pour amortir le choc encaissé par les pieds, le brevet FR 2 746 726, déposé par la Demanderesse, enseigne un dispositif d'amortissement comportant un matériau cellulaire thermoplastique en contact avec le support de plancher 11 du véhicule et traversé, au moins en partie, par des cloisons de retenue déformables et aptes à absorber de l'énergie en cas de choc.

Techniquement performant, ce revêtement occupe cependant un espace qui ne sert pas, hormis en cas de choc.

Il existe donc un besoin pour une solution alternative limitant la perte d'espace utile.

Le but de l'invention est de satisfaire ce besoin.

Selon l'invention, on atteint ce but au moyen d'un dispositif d'amortissement de choc destiné à être fixé à un plancher d'un véhicule automobile et destiné à protéger, en cas de choc dudit véhicule, un pied d'un passager en appui sur ledit dispositif, remarquable en ce qu'il comporte au moins un conduit de fluide apte à se déformer alors sous l'effet d'une pression dudit pied pour amortir ledit choc, au moins en partie recouvert d'une couche en un matériau cellulaire.

En cas de choc du véhicule, le conduit, présentant une rigidité déterminée pour absorber une quantité d'énergie significative en cas de déformation, contribue, en se déformant, à atténuer l'énergie transmise par le support de plancher au pied du passager.

En outre, le conduit de fluide peut servir, pendant le fonctionnement normal du véhicule, à la circulation de gaz, par exemple d'air de chauffage ou de refroidissement d'un habitacle H ou d'un fluide frigorigène au moins en partie sous forme gazeuse. Un espace qui, dans la technique antérieure, était inutilisé pendant le fonctionnement normal du véhicule est donc désormais utilisé pour faire circuler des fluides à travers le véhicule V. L'espace occupé par le conduit de fluide dans la technique antérieure peut donc être utilisé à d'autres fins, par exemple pour augmenter le volume de l'habitacle H.

L'équipement d'un véhicule avec un dispositif d'amortissement selon l'invention est donc possible sans perte d'espace utile.

Selon d'autres caractéristiques préférentielles du dispositif selon l'invention,
- ledit conduit de fluide est en polyéthylène ou en polypropylène, le polyéthylène étant préféré ;
- ledit conduit de fluide est un conduit de circulation d'air destiné à un habitacle dudit véhicule ;
- ladite couche est en un matériau cellulaire ;
- ledit matériau cellulaire est une mousse de type polyuréthanne.
- les lois d'enfoncement de ladite couche et dudit conduit de fluide sont différentes l'une de l'autre ;
- ledit dispositif comporte au moins une couche insonorisante.
   Des avantages de la présente invention apparaîtront à la lecture de la description qui va suivre et à l'examen du dessin annexé dans lequel
- la figure 1 représente en perspective la partie avant d'un habitacle d'un véhicule automobile dans laquelle est disposé un dispositif d'amortissement de choc ;
- la figure 2 est une section transversale d'un dispositif selon l'invention.

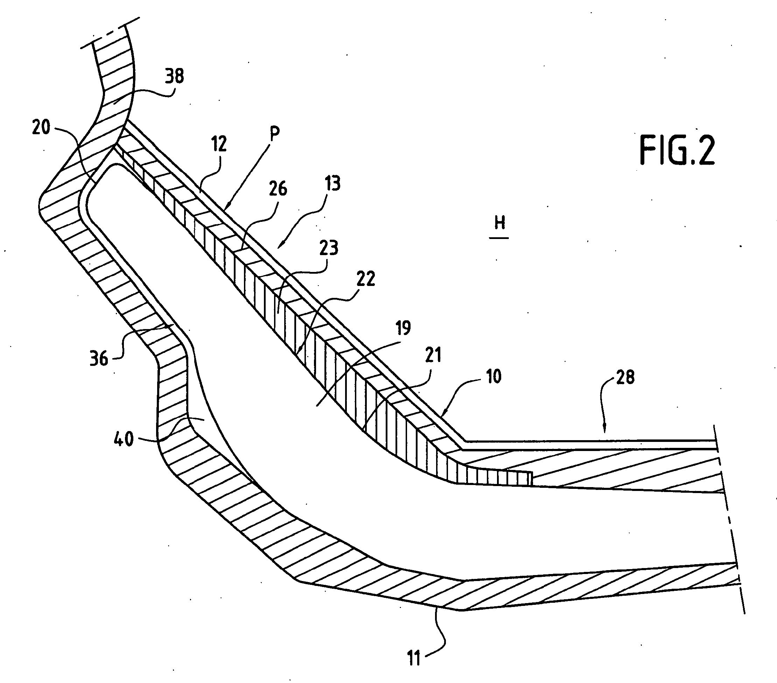

La figure 1 ayant été décrite en introduction, on se reporte à présent à la figure 2.

Selon l'invention, le dispositif d'amortissement comporte au moins un conduit de fluide 19 comportant une paroi 20 apte à se déformer sous l'effet d'une forte pression d'un pied, non représenté, qui y prendrait appui.

Par « forte pression », on entend une pression anormalement forte, résultant notamment d'un choc accidentel du véhicule V.

Une face supérieure 21 d'une paroi supérieure 22 du conduit 19, orientée vers un habitacle H, est de préférence recouverte, au moins en partie, successivement d'une couche 23 en un matériau cellulaire, de préférence en une mousse polyuréthane, d'une première couche insonorisante 26, et d'un revêtement 12 servant de surface d'appui aux pieds d'un passager.

Le revêtement 12 comporte une zone repose-pieds 13 sensiblement inclinée par rapport à l'horizontale, quand le véhicule V est sur une terrain sensiblement horizontal, et une zone de sol 28 sensiblement horizontale. La zone de sol 28 prolonge la zone repose-pied 13 vers l'arrière du véhicule et sert de support au siège du passager, non représenté.

Dans le cas où la zone repose-pied 13 est disposée devant le conducteur du véhicule, elle peut être traversée par un pédalier de commande 14, seulement représenté sur la figure 1.

De préférence, le revêtement 12 est en un matériau cellulaire thermoplastique ou en une matière textile.

Par soucis d'ergonomie, les zones repose-pied 13 et de sol 28 sont sensiblement plates.

Le conduit de fluide 19 s'étend, au moins en partie, sous la zone repose-pieds 13 et/ou sous la zone de sol 28.

De préférence, au moins une partie d'une paroi inférieure 36 du conduit 19 est recouverte, à l'extérieur du conduit 19, d'une deuxième couche insonorisante 38, en un matériau différent ou identique au matériau de la première couche insonorisante 26.

La deuxième couche insonorisante 38 s'étend, au moins en partie sur le support de plancher 11.

Comme on le comprendra mieux dans la suite de la description, les parois supérieure 22 et inférieure 36 du conduit 19 peuvent être en un matériau quelconque et avoir une épaisseur et une forme quelconque. Il en est de même de la nature et de la quantité du matériau cellulaire de la couche 23 et de son agencement vis-à-vis du conduit 19.

La détermination de tous ces paramètres dépend de la destination du dispositif selon l'invention. Elle résulte de règles connues de l'homme du métier.

Cette détermination prend notamment en compte les contraintes suivantes :
- la loi d'enfoncement du dispositif d'amortissement, calculée pour une protection maximale du passager,
- les contraintes physico-chimiques auxquelles le conduit 19 est soumis, en particulier les contraintes de température,
- les contraintes ergonomiques, en particulier liées à l'encombrement du dispositif d'amortissement,
- les contraintes dynamiques posées par la circulation des gaz dans le conduit 19.

Les lois d'enfoncement du conduit 19 et de la couche 23 peuvent être choisies identiques ou différentes, pourvu que la loi d'enfoncement global du conduit 19 et de la couche 23 soit optimale pour amortir les chocs violents subis par le véhicule.

Par « loi d'enfoncement », on entend la fonction évaluant l'enfoncement d'un pied dans un dispositif d'amortissement, classiquement en millimètres, en fonction de l'amplitude d'une force que ce pied exerce sur ce dispositif lorsqu'il commence à y pénétrer, classiquement en Newton.

L'aptitude à amortir un choc, c'est-à-dire la capacité à absorber l'énergie plutôt qu'à la transmettre, dépend des matériaux utilisés, de l'épaisseur de la paroi 20 et de la couche 23, et de la conformation géométrique du dispositif d'amortissement.

L'homme du métier sait comment déterminer ces différents paramètres pour aboutir à un comportement du dispositif selon l'invention conforme à la loi d'enfoncement qu'il a choisie.

Le conduit de fluide 19 est de préférence choisi en polyéthylène ou en polypropylène.

Avec ces matériaux, l'épaisseur de la paroi 36 est typiquement comprise entre 0,5 et 3 mm, de préférence entre 1,5 et 2 mm, et peut varier selon les zones où s'étend le conduit 19. Elle est généralement plus faible dans les zones où le conduit 19 sert de moyen d'amortissement de choc.

Avantageusement, l'utilisation d'un conduit de fluide comme moyen d'amortissement permet donc d'optimiser la consommation de matière.

Les épaisseurs des parois inférieure 36 et supérieure 22 peuvent être différentes l'une de l'autre.

De préférence, l'épaisseur de la couche 23 est comprise entre 0 et 5 cm, de préférence supérieure ou égale à 10 mm.

La présence de la couche 23 permet cependant avantageusement une plus grande souplesse dans le choix de la forme du conduit 19, ce qui permet par exemple d'adapter la section du conduit 19 de manière à minimiser les pertes de charges et/ou de choisir une forme de conduit 19 qui en facilite la fabrication.

En outre, selon un mode de réalisation non représenté, de la mousse peut être disposée ailleurs que sur la paroi supérieure 22. Par exemple, le conduit 19 peut être enrobé, au moins en partie de mousse polyuréthane.

Des espaces vides 40 peuvent être prévus entre la deuxième couche insonorisante 38 et la paroi inférieure 36.

A encombrement identique, le dispositif selon l'invention nécessite moins de matériau cellulaire que le dispositif d'amortissement décrit dans le brevet FR 2 746 726, une fraction du volume nécessaire à l'amortissement étant occupé par le conduit 19.

Avantageusement, la quantité de matériau cellulaire consommée en est réduite.

Le conduit 19 est de préférence un conduit de circulation d'air destiné à être soufflé dans l'habitacle H pour le refroidir et/ou le réchauffer.

Dans le cadre d'une utilisation du conduit 19 pour acheminer des gaz destinés à la régulation thermique de l'habitacle H, le polyéthylène est préféré pour fabriquer le conduit 19. En effet, dans cette application, la température de la paroi du conduit 19 peut atteindre environ 100°C et le polyéthylène résiste mieux que le polypropylène à des températures aussi élevées.

Sans l'aptitude du conduit 19 à la déformation, une couche 23 de dimensions similaires à celles du dispositif décrit dans FR 2 746 726 aurait été indispensable pour assurer un amortissement satisfaisant. L'encombrement de l'ensemble conduit 19 - couche 23 aurait alors rendu difficile, sinon impossible, son incorporation ergonomique dans l'habitacle H.

Avantageusement, l'utilisation d'un conduit de fluide 19 déformable permet son passage sous la zone repose-pieds 13 du revêtement 12.

Un choc frontal se traduit par l'application d'une pression P par le pied du passager sur la zone repose-pieds 13, puis, éventuellement en cas de choc violent, par l'enfoncement du pied dans le dispositif d'amortissement selon l'invention, en direction de l'avant du véhicule.

Un tel enfoncement conduit successivement aux déformations du revêtement 12, de la couche insonorisante 26, de la couche 23 en un matériau cellulaire, de la paroi supérieure 22, de la paroi inférieure 36, et de la deuxième couche insonorisante 38.

Selon la violence du choc, seuls certains de ces éléments subiront une déformation.

Ainsi, en cas de choc de faible ampleur, l'absorption d'énergie par la couche 23 suffira à arrêter l'enfoncement du pied sans provoquer de lésion.

En cas de choc de plus forte ampleur, la déformation du dispositif selon l'invention se poursuivra, et la paroi supérieure 22, voire la paroi inférieure 36, se déformeront, contribuant ainsi à l'amortissement du choc « en douceur ».

Avantageusement, le dispositif selon l'invention permet un amortissement en deux paliers, les petits chocs étant absorbés par la couche 23, les chocs importants par la combinaison de la couche 23 et du conduit 19.

En se déformant tout en opposant une résistance déterminée en fonction d'une loi d'enfoncement choisie, les parois inférieure 36 et supérieure 22 et la couche de mousse polyuréthane 23 contribuent à absorber une fraction de l'énergie transmise par le pied. Ils limitent ainsi la réaction du dispositif d'amortissement sur le pied et évitent l'application d'une contrainte dangereuse sur ce pied.

Le revêtement 12 et les couches insonorisantes 26 et 38 ne sont pas prévues, dans le mode de réalisation préféré de l'invention, pour contribuer significativement, comparativement aux contributions de la couche 23 et du conduit 19, à l'absorption d'énergie en cas de choc. Si nécessaire, l'homme du métier peut néanmoins choisir des matériaux et/ou des structures pour le revêtement 12 et les couches insonorisantes 26 et 38 qui leur permettent d'accroître cette contribution.

Bien entendu, la présente invention n'est pas limitée au mode de réalisation décrit et représenté fourni à titre d'exemple illustratif et non limitatif.

Par exemple, le conduit de fluide 19 pourrait comporter des cloisons ou des nervures internes.

## Revendications

1. Dispositif d'amortissement de choc destiné à être fixé à un plancher (10) d'un véhicule automobile, de manière à protéger, en cas de choc dudit véhicule, un pied d'un passager en appui sur ledit dispositif, **caractérisé en ce qu'**il comporte au moins un conduit de fluide (19) apte à se déformer sous l'effet d'une pression dudit pied pour amortir ledit choc, au moins en partie recouvert d'une couche (23) en un matériau cellulaire.

2. Dispositif d'amortissement selon la revendication 1, **caractérisé en ce que** ledit conduit de fluide (19) a une paroi d'une épaisseur comprise entre 0,5 et 3 mm.

3. Dispositif d'amortissement de choc selon l'une quelconque des revendications 1 et 2, **caractérisé en ce que** ledit conduit de fluide (19) est en polyéthylène ou en polypropylène.

4. Dispositif d'amortissement de choc selon l'une quelconque des revendications 1 à 3, **caractérisé en ce que** ledit conduit de fluide (19) est un conduit de circulation d'air destiné à un habitacle (H) dudit véhicule (V).

5. Dispositif d'amortissement de choc selon l'une quelconque des revendications précédentes, **caractérisé en ce que** ledit matériau cellulaire est une mousse de type polyuréthanne.

6. Dispositif d'amortissement de choc selon l'une quelconque des revendications précédentes, **caractérisé en ce que** les lois d'enfoncement de ladite couche (23) et dudit conduit de fluide (19) sont différentes l'une de l'autre.

7. Dispositif d'amortissement de choc selon l'une quelconque des revendications précédentes, **caractérisé en ce qu'**il comporte au moins une couche insonorisante (26,38).

## Claims

1. Shock absorber device intended to be fastened to a floor (10) of a motor vehicle, so as to protect, in the event of said vehicle receiving a shock, a passenger's foot pressing on said device, **characterized in that** it comprises at least one fluid duct (19) capable of deforming under the effect of the pressure of said foot so as to damp said shock, at least partly covered with a layer (23) made of a cellular material.

2. Shock absorber device according to Claim 1, **characterized in that** said fluid duct (19) has a wall with a thickness of between 0.5 and 3mm.

3. Shock absorber device according to either of Claims 1 and 2, **characterized in that** said fluid duct (19) is made of polyethylene or polypropylene.

4. Shock absorber device according to any one of Claims 1 to 3, **characterized in that** said fluid duct (19) is a duct for circulating air intended for a passenger compartment (H) of said vehicle (V).

5. Shock absorber device according to any one of the preceding claims, **characterized in that** said cellular material is a polyurethane-type foam.

6. Shock absorber device according to any one of the preceding claims, **characterized in that** the laws governing the depression of said layer (23) and of said fluid duct (19) differ from each other.

7. Shock absorber device according to any one of the preceding claims, **characterized in that** it includes at least one soundproofing layer (26, 38).

## Patentansprüche

1. Stoßdämpfungsvorrichtung, die dazu bestimmt ist, an einem Boden (10) eines Kraftfahrzeugs befestigt zu werden, derart, dass im Fall eines Stoßes des Fahrzeugs ein Fuß eines Fahrgastes, der sich auf der Vorrichtung abstützt, geschützt wird, **dadurch gekennzeichnet, dass** sie wenigstens eine Fluidleitung (19) aufweist, die sich unter der Wirkung eines Drucks des Fußes verformen kann, um den Stoß zu dämpfen, und wenigstens teilweise durch eine Schicht (23) aus Zellmaterial abgedeckt ist.

2. Dämpfungsvorrichtung nach Anspruch 1, **dadurch gekennzeichnet, dass** die Fluidleitung (19) eine Wand mit einer Dicke besitzt, die im Bereich von 0,5 bis 3 mm liegt.

3. Stoßdämpfungsvorrichtung nach einem der Ansprüche 1 und 2, **dadurch gekennzeichnet, dass** die Fluidleitung (19) aus Polyethylen oder aus Polypropylen besteht.

4. Stoßdämpfungsvorrichtung nach einem der Ansprüche 1 bis 3, **dadurch gekennzeichnet, dass** die Fluidleitung (19) eine Luftzirkulationsleitung ist, die für eine Fahrgastzelle (H) des Fahrzeugs (V) vorgesehen ist.

5. Stoßdämpfungsvorrichtung nach einem der vorhergehenden Ansprüche, **dadurch gekennzeichnet, dass** das Zellmaterial ein Schaumstoff des Typs Polyurethan ist.

6. Stoßdämpfungsvorrichtung nach einem der vorhergehenden Ansprüche, **dadurch gekennzeichnet, dass** die Eindringtiefengesetze der Schicht (23) und der Fluidleitung (19) voneinander verschieden sind.

7. Stoßdämpfungsvorrichtung nach einem der vorhergehenden Ansprüche, **dadurch gekennzeichnet, dass** sie wenigstens eine Schalldämmschicht (26, 38) enthält.
